# EUROPEAN PATENT APPLICATION

(11) **EP 1 662 366 A1**
(43) Date of publication of application: **31.05.2006**
(21) Application number: 04027955.6
(22) Date of filing: 25.11.2004
(51) Int. Cl.: G06F 3/033, G06F 17/30

(54) **Method for blocking network advertising**

(71) Applicant: Inventec Appliances Corp., Wugu Shiang, Taipei (TW)
(72) Inventor: Lai, Cheng-Shing, Wugu Shiang Taipei (TW); Yang, Sheng-Hong, Nanking (CN); Ding, Jian-Ning, Nanking (CN)
(74) Representative: Haft, von Puttkamer, Berngruber, Czybulka

(57) **Abstract**

The present invention discloses a method for blocking network advertising, which comprises the steps of installing a blocking software program having at least one blocking module in the storage medium of an electronic device, each blocking module has different blocking conditions going with a corresponding processing condition respectively, such that during the process of the electronic device reading a webpage editing content, the electronic device will execute the blocking software program and use the blocking module to process the webpage editing content. If the webpage editing content matches any of the blocking conditions, the corresponding processing condition will be used for processing accordingly and prevent the network advertising from appearing on the browser window or keep on processing the webpage editing content.

## Description

### BACKGROUND OF THE INVENTION

### Field of the Invention

The present invention relates to a method for blocking network advertising, more particularly to a method for blocking unwanted network advertising while continuing the process of regular network activities.

### Description of the Related Art

In recent years, the development of network industry is blooming and people can search all kinds of information from different websites (or webpages). However, the present websites place more and more advertising on a website as to increase the income of the website. The types of these advertisings include the following:
1. Popup Advertising: After a webpage of a website is opened, the advertising will automatically pop up from the browser window and occupy the whole or part of the browser window, or automatically open another browser window to link to a specific webpage. Further, a popup advertising produced by a FLASH software program will occupy the browser window for a period of time before disappearing from the browser window automatically, which is very annoying to users.
2. Floating Advertising: After a webpage of a website is opened, one or more floating advertisings will appear in the browser window, and the floating advertising will shift here and there in the browser window, which affects users' viewing and browsing the webpage.
3. Fixed Banner Advertising: After a webpage of a website is opened, banner advertising is fixed in a specific area of the browser window, and the fixed banner comes with different fonts, images or animations, and their changes make us dizzy and also affect users' viewing and browsing the webpage.
4. Suspending Advertising: After a webpage of a website is opened, an advertising window having a specific size will be opened automatically, and such advertising window will move accordingly with the position of the cursor in the browser window.
5. Downloading ActiveX control object and insert object, Executing dialog box, and Java requesting Java simulator hint box, etc.

These advertising windows not only annoy users and become a burden to the system performance, but also use up much bandwidth. Mostly important, the frequent appearing advertising windows will affect the mood of the users, or even cause the users to give up some of the websites which will automatically produce network advertising.

However, these network advertisings are not totally irremovable. For example, we can prevent unwanted network advertisings by setting up the security level of the browser. The option provided by Internet for assigning the security level is selected first, and then a certain level is clicked to choose a specific security level. The Active X control object and insert object and each corresponding option are disabled or a high priority is selected for the security level. Therefore the popup advertising, the floating advertising, the suspending advertising, the ActiveX control object and insert object downloads, the dialog box execution, and the request of Java program for installing a Java simulator hint box, etc will be eliminated. In addition, if the corresponding options of the multimedia nodes are cancelled, then the picture, animation, sound and video frequency are prohibited from playing or displaying. However, after the browser completes the aforementioned setup, the unwanted popup advertising, floating advertising, suspending advertising, ActiveX control object and insert object downloads, dialog box execution, and request of Java program for installing a Java simulator hint box are eliminated, but other desired functions and effects are not operable or displayed as well. It is obviously that such method does not meet the user's requirements.

To effectively overcome the shortcomings of the foregoing setup method, some software companies or individuals have developed different network advertising blocking programs, such as the Ad Killer and Popup Preventer, etc. However, these programs only offer several days for a free trial period, the software companies will enable the advertising window and notice users to purchase the network advertising blocking programs. Therefore, such arrangement still has not solved the problem of automatically opening the advertising window.

### Summary of the Invention

In view of the foregoing shortcomings of the prior art, the inventor of the present invention based on years of experience to conduct extensive researches and experiments and finally invented the method for blocking network advertising in accordance with the present invention in hope of contributing to the general public.

Therefore, it is the primary objective of the present invention to provide a method for blocking network advertising, which comprises the steps of installing a blocking software program in the storage medium of an electronic device, and the blocking software program has at least one blocking module, and each blocking module has different blocking conditions and each of such blocking conditions goes with a processing condition, such that during the process of the electronic device reading the webpage editing content, the electronic device executes the blocking software program and uses the blocking module to process the webpage editing content. If the webpage editing content matches any of the blocking conditions, the corresponding processing condition will be used for processing and preventing the network advertising from appearing on the browser window or keeping on processing the webpage editing content. The invention not only achieves the purpose of blocking the unwanted network advertising, but also allows users to read their desired contents.

### BRIEF DESCRIPTION OF THE DRAWINGS

The above objects, features and advantages of the present invention will become apparent from the following detailed description taken with the accompanying drawing. However, these drawings are provided for reference and illustration and not intended to act as a limitation to the present invention.
FIG 1 is a view of the architecture of the method for blocking network advertising according to the present invention.
FIG 2 is a flow chart of the method for blocking network advertising according to the present invention.
FIG 3 is a flow chart of the actions taken by the processing condition of a black list blocking module according to the present invention.
FIG 4 is a flow chart of the actions taken by the processing condition of a white list blocking module according to the present invention.
FIG 5 is a flow chart of the actions taken by the processing condition of a conditional blocking module according to the present invention.
FIG 6 is a flow chart of the actions taken by the processing condition of a learning blocking module according to the present invention.
FIG 7 is a flow chart of the actions taken by the processing condition of a preventive blocking module according to the present invention.
FIG 8 is a flow chart of the actions taken by the processing condition of a position limit blocking module according to the present invention.
FIG 9 is a flow chart of the actions taken by the processing condition of a time limit blocking module according to the present invention.
FIG 10 is a flow chart of the actions taken by the processing condition of a mask blocking module according to the present invention.
FIG 11 is a flow chart of the actions taken by the processing condition of a default blocking module according to the present invention.

### DETAILED DESCRIPTION OF THE PREFERRED EMBODIMENTS

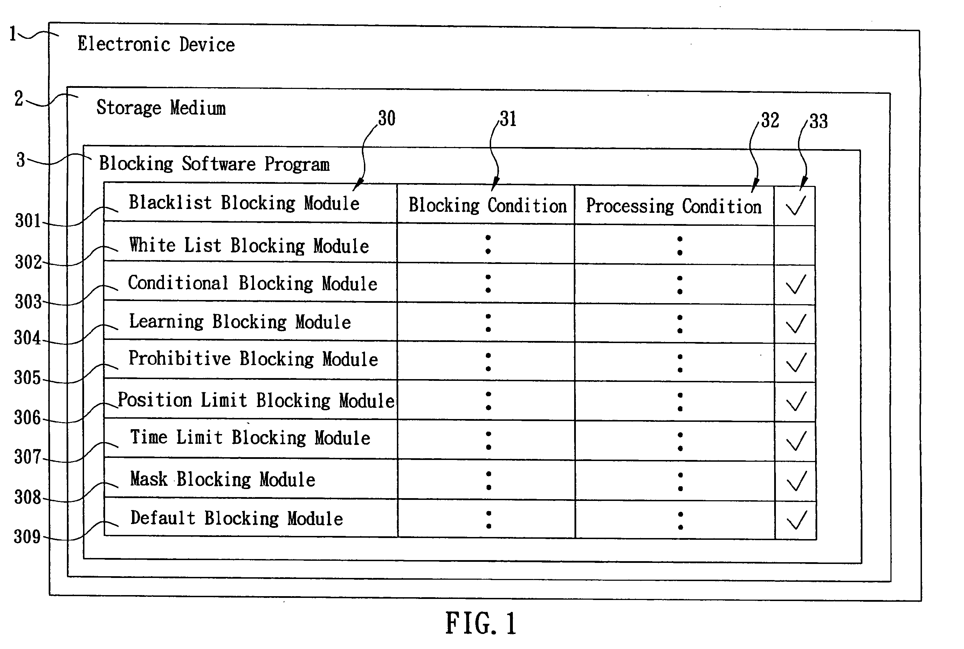

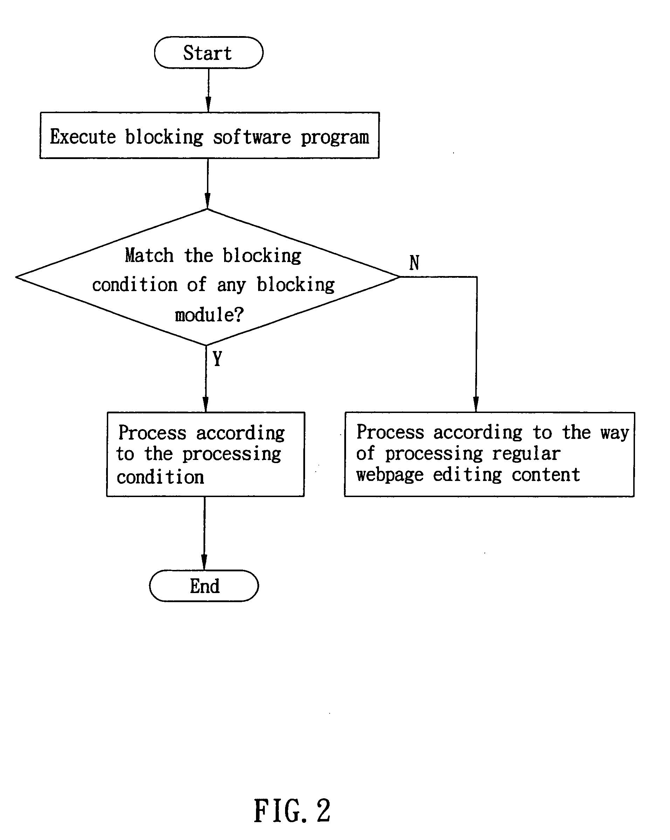

Please refer to FIGS. 1 and 2 for a method for blocking network advertising according to the present invention, which installs a blocking software program 3 in a storage medium 2 of an electronic device 1, and the blocking software program 3 has at least one blocking module 30. A blocking condition 31 is defined in the blocking module 30 and a processing condition 32 is defined to go with the blocking condition 31, such that during the process of the electronic device 1 reading a webpage editing content, the electronic device executes the blocking software program 3. If the blocking software program 3 finds out that a portion of the webpage editing content meets the blocking condition 31 of any blocking module 30, then the webpage editing content is processed to prevent the display of the unwanted network advertising according to the processing condition 32 corresponding to the blocking condition 31. The remaining desired webpage editing content can still be processed as usual. Therefore, the invention can prevent the network advertising which will not slow down the speed of our network connection.

In a preferred embodiment of the present invention, after the operating system stored in the storage medium 2 of the electronic device 1 is booted, the blocking software program 3 is embedded in the operating system or after the browser software program stored in the storage medium 2 of the electronic device 1 is executed, the blocking software program 3 is embedded in the browsing software. If any content is downloaded to the electronic device 1 after the electronic device 1 is connected to the network, the electronic device 1 will immediately use the blocking software program 3 to process the webpage editing content and block the unwanted network advertising. Therefore, if a backdoor program of the network advertising is embedded into the electronic device 1, the electronic device still can use the blocking software program to block the unwanted network advertising.

The electronic device 1 according to this embodiment accesses a specific address of a network (such as Internet) by a uniform resource locator (URL), and such specific address can be downloaded to the webpage editing content, so that the electronic device 1 can output a webpage in a webpage browsing area according to the webpage editing content.

If the webpage editing content has a popup instruction (such as window.open and document.open instructions of JavaScript) and such popup instruction comes with a specified URL address, the electronic device 1 will open another webpage browsing area according to the popup instruction, and another webpage editing content is loaded from the specified URL address, so that the electronic device 1 will output another webpage to another webpage browsing area according to such other webpage editing content to display the popup advertising.

Further, if a part of the webpage editing contents is a webpage element such as a graphic file, a small multimedia or Java program, and the like downloaded from a specified URL address, and the webpage element matches the floating instruction of the webpage element such as the position: absolute instruction or the cascading style sheet (CCS) and the style instructions of the JavaScript according to the webpage editing content as to access and show a floating advertising in the webpage.

Further, the fixed banner advertising in the webpage will download a webpage element from a specified URL address to the webpage editing content, and the webpage element will be displayed at a specified position in the webpage according to the corresponding instruction in the webpage editing content.

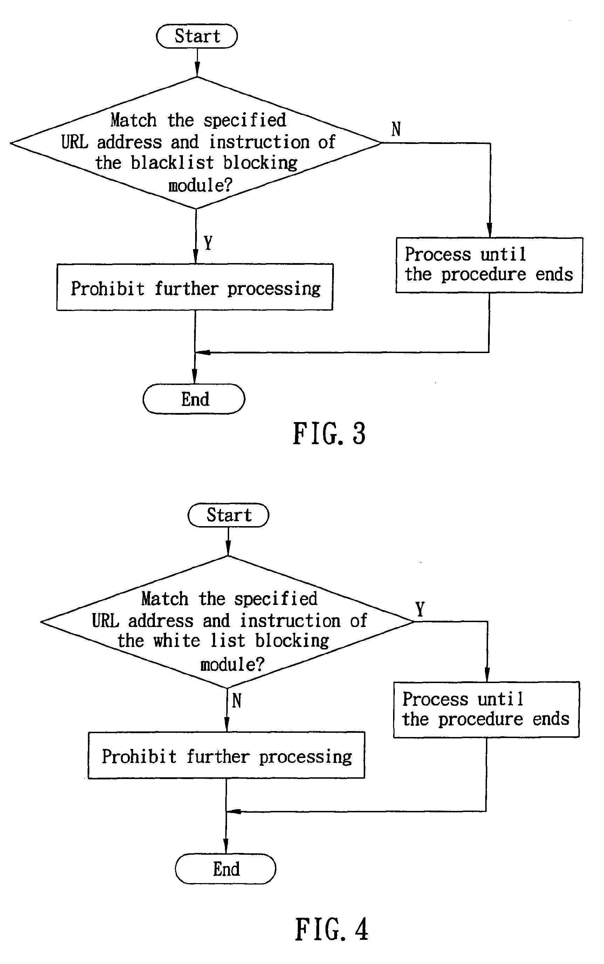

From the description above, the network advertisings must use a specific download position of the URL address and execute at least one instruction in every URL address in the webpage editing content and each corresponding specified URL address. The popup advertising, floating advertising and fixed banner advertising will be displayed on the webpage. Please refer to FIGS. 1 and 3 for another preferred embodiment of the present invention. The blocking software program 3 comprises a blacklist blocking module 301, and a blocking condition 31 defined by the blacklist blocking module 301 comprises at least one specified URL address, and the specified URL address matches an instruction, and the processing condition of the blacklist blocking module 301 specifies that if it is necessary to download and process a specified URL address in any webpage editing content read by the electronic device 1 and the specified URL address matches the specified URL address of the blocking condition 31 defined by the blacklist blocking module 301, then the electronic device 1 will prohibit loading and processing the specified URL address. Therefore, the download will be prohibited and the instructions such as the popup instruction, floating instruction or descriptive instruction will not be executed. If it is necessary to download and process a specified URL address in any webpage editing content read by the electronic device 1, but the specified URL address mismatches the specified URL address of the blocking condition 31 defined by the blacklist blocking module 301, then such webpage editing content will be considered normal and the download and processing will be carried out as usual.

Further, please refer to FIGS. 1 and 4 for a preferred embodiment of the present invention. The blocking software program 3 also comprises a white list blocking module 32, and the blocking condition 31 defined by the white list blocking module 302 includes at least one specified URL address, and such URL address corresponds to at least one instruction. The processing condition of the white list blocking module 302 specifies that if it is necessary to download and process a specified URL address in any webpage editing content read by the electronic device 1 and the specified URL address matches the specified URL address of the blocking condition 31 defined by the white list blocking module 301 and the instruction corresponding to the specified URL address also matches with at least one instruction corresponding to the specified URL address of the blocking condition 31 defined by the white list blocking module 302, then such webpage editing content will be considered normal and the electronic device 1 will download and process accordingly, or else the electronic device 1 will prohibit downloading and processing the specified URL address.

Further, after an option of a first webpage for displaying the first webpage editing content is clicked, the popup instruction such as window.open and document.open of the JavaScript is used to open a second webpage browsing area and read a second webpage editing content, such that the second webpage browsing area produces a new webpage according to the second webpage editing content. Therefore, if we want to prevent the popup advertising from popping up in a webpage, the simplest method is to open the new webpage browsing area and idle run or do not execute the popup instruction (same as the processing condition of the foregoing black list blocking module 301). However, such arrangement will give rise to another problem; if a user browses a news website and click on news headline (or option), then a new webpage browsing area will display the content of the news. Therefore, some of the user's information will be ignored by using the aforementioned method, in which the new webpage will not show after the headline (or option) of that webpage is clicked.

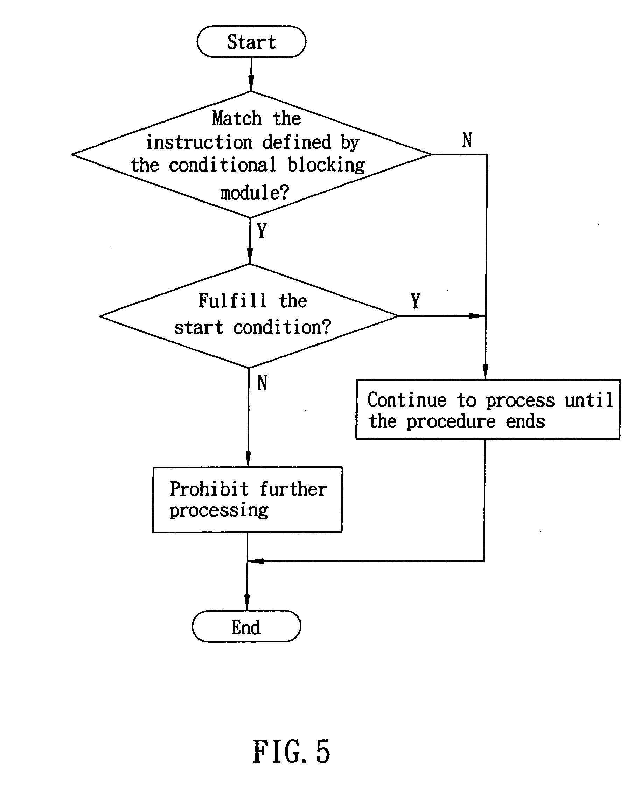

Please refer to FIGS. 1 and 5 for the present invention. The blocking software program 3 comprises a conditional blocking module 303, and the blocking condition 31 defined by the conditional blocking module 303 comprises at least one instruction, and the processing condition of such conditional blocking module 303 specifies that if any webpage editing content read by the electronic device I matches the instruction defined by the conditional blocking module 303, then the electronic device 1 will make a request to determine whether or not the electronic device 1 fulfills a start condition before executing the instruction. If the electronic device 1 fulfills the start condition, then webpage editing content will be considered normal and the download and processing will be carried out as usual, or else the processing of the webpage editing content will be stopped. If the webpage editing content is considered not matching with the instruction defined by the conditional blocking module 303, then the processing will be carried on. In this embodiment, the start condition may specify that the input signal (such as the clicking signal of a mouse or the key code signal of a keyboard) produced by an external input device should be read before executing the instruction (such as the popup instruction for opening a new window). If the start condition is fulfilled, then the processing of such webpage editing content will be continued. If the electronic device 1 has not received the input signal produced by the external input device, then the processing of such webpage editing content will be prohibited, or certain specified URL address are defined and allowed to be opened in advance.

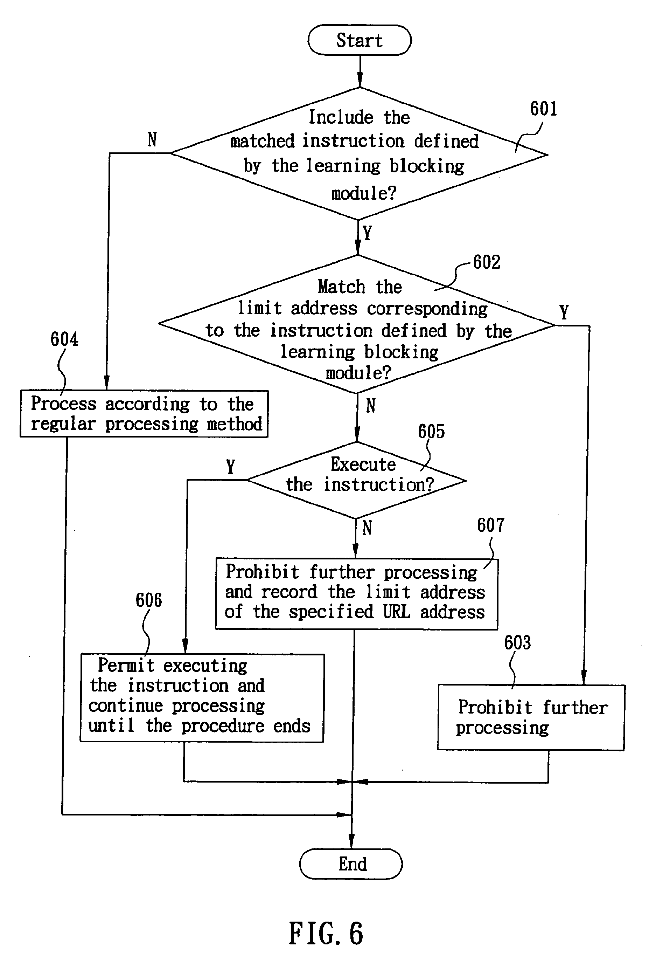

Please refer to FIGS. 1 and 6. The blocking software program 3 comprises a learning blocking module 304, and the blocking condition 31 defined by the learning blocking module 304 comprises at least one instruction and is capable of recording at least one limit address. The processing condition of the learning blocking module 304 is processed according to the following steps:
Step 601: Firstly, determine whether or not any webpage editing content read by the electronic device 1 matches the instruction defined by the learning blocking module 304; if yes, then go to Step 602, else go to Step 604;
Step 602: Determine whether or not the specified URL address corresponding to the matched instruction defined by the learning blocking module 304 matches a limit address recorded by the blocking condition 31 defined by the learning blocking module 304; if yes, go to Step 603, else go to Step 605;
Step 603: consider the webpage editing content is abnormal, and thus do not execute the instruction, and then end the procedure;
Step 604: If any webpage editing content read by the electronic device 1 does not include the matched instruction defined by the learning blocking module 304; if yes, then process the webpage editing content as usual, and then end the procedure;
Step 605: If any webpage editing content read by the electronic device 1 includes the matched instruction defined by the learning blocking module 304, but the specified URL address corresponding to the matched instruction defined by the learning blocking module 304 mismatches with a limit address recorded by the blocking condition 31 defined by the learning blocking module 304, then a query window is opened to ask the user whether or not to execute the instruction defined by the learning blocking module 304, and download to the another webpage editing content according to the specified URL address; if yes, go to Step 606, else go to Step 607;
Step 606: If the user permits the execution of the instruction defined by the learning blocking module 304, then the webpage editing content will be considered normal, and the process will continue until the procedure ends;
Step 607: If the user does not permit the execution of the instruction defined by the learning blocking module 304, then the electronic device 1 will prohibit the processing of the webpage editing content and record the URL specified address corresponding to the instruction or script as a limit address, such that any webpage editing content including the instruction and limit address cannot be processed by the electronic device 1 any further and thus preventing the popup advertising from showing up.

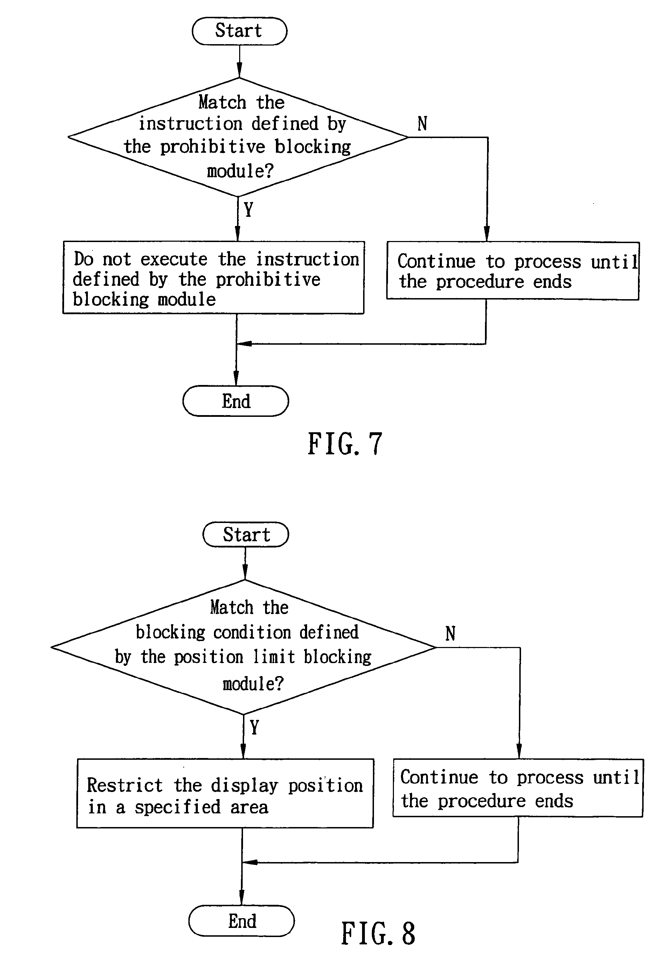

Further, the floating advertising writes the absolute position instruction (such as position : absolute) and the object instruction (such as style) of the JavaScript from the webpage editing content for specifying the floating position of a floating advertising, and thus can prevent the floating advertising from showing up. Please refer to FIGS. 1 and 7. The blocking software program 3 comprises a prohibitive blocking module 305, and a blocking condition 31 defined by the prohibitive blocking module 305 comprises at least one instruction. A processing condition 32 of the prohibitive blocking module 305 specifies that if any webpage editing content read by the electronic device 1 includes the matched instruction defined by the prohibitive blocking module 305, then the instruction defined by the prohibitive blocking module 305 will not be executed. If any webpage editing content read by the electronic device 1 does not include the matched instruction defined by the prohibitive blocking module 305, then the webpage editing content is considered normal, the webpage editing content will be processed according. Thus, this arrangement can prevent the floating advertising from showing up.

Since after the electronic device 1 has received and processed the webpage editing content, the instruction related to the prohibited content will not be executed, which is unlike the other blocking module working together with other processing conditions. For example, the blacklist blocking module 301 comprises at least one specified URL address and each of these specified URL addresses corresponds to an instruction for the processing. Therefore, if a portion of the contents is not executed but this portion is required by the user, then it will cause inconvenience to the user for browsing a webpage. Please refer to FIGS. 1 and 8. The blocking software program 3 comprises a position limit blocking module 306, and a blocking condition 31 defined by the position limit blocking module 306 comprises at least one instruction or script. A processing condition 32 of the position limit blocking module 306 specifies that if the webpage editing content read by the electronic device 1 includes the matched instruction defined by the position limit blocking module 306, then the instruction defined by the position limit blocking module 306 will limit the position for displaying the content in a specified area as to limit the position of the floating advertising.

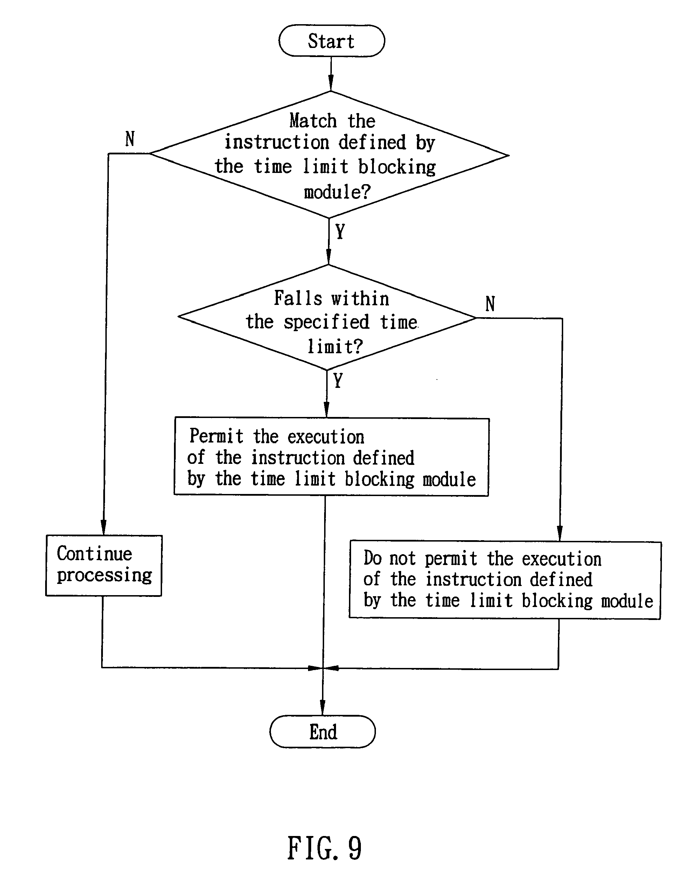

Please refer to FIGS. 1 and 9. The blocking software program 3 comprises a time limit blocking module 307, and a blocking condition 31 defined by the time limit blocking module 307 comprises at least one instruction, and a processing condition 32 of the time limit blocking module 307 specifies that if any webpage editing content read by the electronic device 1 includes the matched instruction defined by the time limit blocking module 307, then the webpage editing content is determined whether or not it falls within a specific time; if yes, then the execution of the instruction defined by the time limit blocking module 307 will be permitted, or else the execution of the instruction defined by the time limit blocking module 37 will not be permitted, and the mismatched instruction defined by the time limit blocking module 37 will be processed regularly as to achieve the purpose of limiting the time for showing the floating advertising.

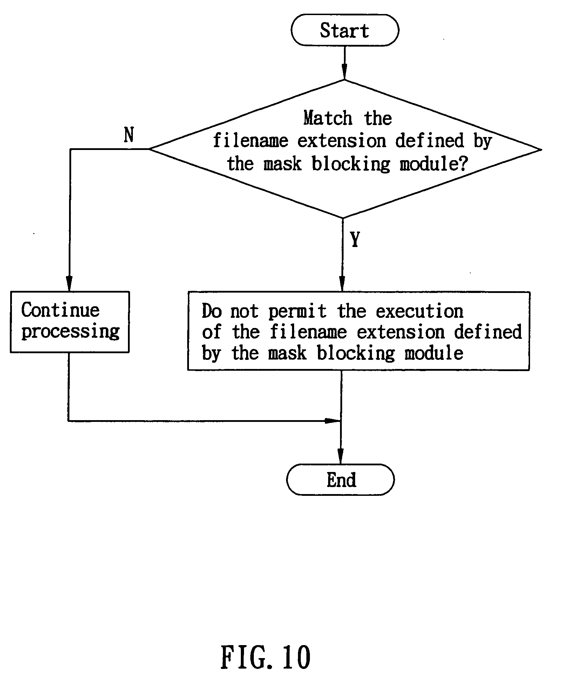

As to the fixed banner advertising, the webpage elements such as a graphic file, a multimedia file or a small JavaScript program are written into the webpage editing content, and the ending part of these webpage elements usually adopt the extension of the filename of these webpage elements. Please refer to FIGS. 1 and 10. The blocking software program 3 comprises a mask blocking module 308, and the blocking condition 31 of the mask blocking module 308 comprises at least one filename extension defined by the mask blocking module 308. A processing condition 32 of the mask blocking module 308 specifies that if any webpage editing content read by the electronic device 1 includes the matched filename extension defined by the mask blocking module 308, then the download will not be permitted, and the webpage device having the matched filename extension defined by the mask blocking module 308 will be processed. If any webpage editing content read by the electronic device 1 does not include the matched filename extension defined by the mask blocking module 308, then the electronic device 1 will continue processing the webpage editing content as to achieve the purpose of limiting the fixed banner advertising from showing up.

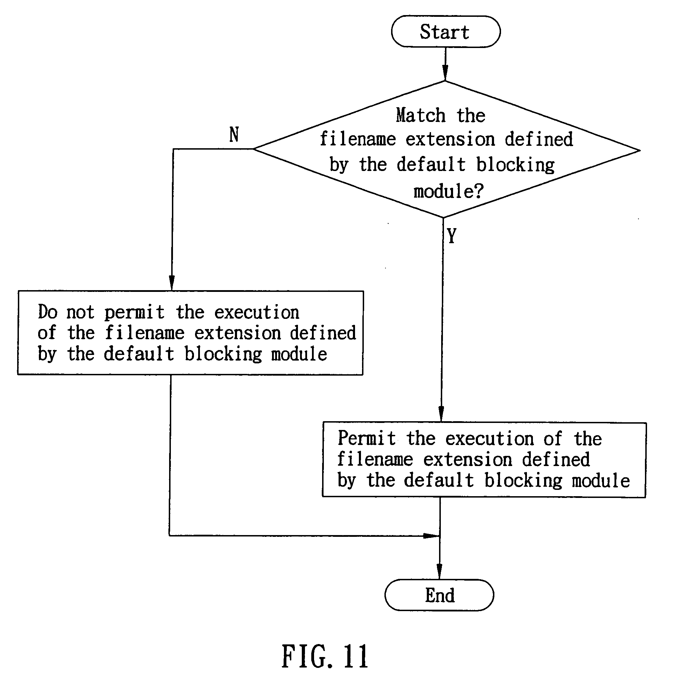

Further, please refer to FIGS. 1 and 11. The blocking software program 3 comprises a default blocking module 309, and the blocking condition 31 of the default blocking module 309 comprises at least one filename extension defined by the default blocking module 309. A processing condition 32 of the default blocking module 309 specifies that if any webpage editing content read by the electronic device 1 includes the matched filename extension defined by the default blocking module 309, then the download will be permitted, and the webpage device having the matched filename extension defined by the default blocking module 309 will be processed. If the webpage editing content read by the electronic device 1 does not include the matched filename extension defined by the default blocking module 309, then the download will not be permitted and the webpage device having the mismatched filename extension defined by the default blocking module 309 will not be processed, which can also achieve the purpose of blocking the fixed banner advertising from showing up.

Since the processing condition for different blocking modules 30 varies such as the blacklist blocking module 301 having a completely opposite processing condition with that of a white list blocking module 302, therefore if both blacklist blocking module 301 and white list blocking module 302 are opened, there will be a conflict when the electronic device 1 processes the webpage editing content. Thus, the blocking software program 3 according to the present invention comprises an option defined item 33 for each blocking module 30, and the option defined item 33 defines whether to open or close the corresponding blocking module 30 after the electronic device 1 executes the blocking software program 3. As a result, the user can use the option defined item 33 to define the opening or closing of the blocking module 3 and avoid the conflict between different blocking modules.

With the aforementioned blocking modules, an appropriate blocking condition 31 is set for different network advertisings and works together with a processing condition 32 corresponding to the blocking condition 31 to block various different network advertisings or show the network advertising under restricted conditions. In the meantime, the present invention does not prevent users to browse their desired webpage, and also can fully overcome the shortcomings of the method of blocking unwanted network advertising and lower the opportunity of having the network advertising occupying much bandwidth.

While the invention has been described by way of examples and in terms of preferred embodiments, it is to be understood that the invention is not limited thereto. To the contrary, it is intended to cover various modifications and similar arrangements and procedures, and the scope of the appended claims therefore should be accorded the broadest interpretation so as to encompass all such modifications and similar arrangements and procedures.

In summation of the above description, the present invention herein enhances the performance than the conventional structure and further complies with the patent application requirements and is submitted to the Patent and Trademark Office for review and granting of the commensurate patent rights.

## Claims

1. A method for blocking network advertising, having a blocking software program installed in a storage device of an electronic device, and said blocking software program having at least one blocking module, and said blocking module defining a blocking condition and a processing condition corresponding to said blocking condition, such that after said electronic device reads a webpage editing content, the processing procedure of said electronic device comprising the steps of:
said electronic device executing said blocking software program;
said blocking software program analyzing a part of said webpage editing content to check if said part matches said blocking condition of one of said blocking modules; if said part matches said blocking condition of one of said blocking modules, then said webpage editing content is processed according to said processing condition corresponding to said blocking condition to restrict said network advertising from being displayed, and the rest of said webpage editing content is processed.

2. The method for blocking network advertising of claim 1, wherein said electronic device having an operating system installed in said storage medium is booted, and then said blocking software program is embedded into said operating system, such that after said electronic device connects to a network, only said webpage editing content is downloaded to said electronic device, and said electronic device immediately uses said blocking software program to process said webpage editing content and blocks network advertising.

3. The method for blocking network advertising of claim 1, wherein said electronic device having a browsing program installed in said storage medium is booted, and then said blocking software program is embedded into said browsing program, such that after said electronic device connects to a network, only said webpage editing content is downloaded to said electronic device, and said electronic device immediately uses said blocking software program to process said webpage editing content and blocks network advertising.

4. The method for blocking network advertising of claim 1, wherein said blocking software program comprises a blacklist blocking module, and said blocking condition of said blacklist blocking module has at least one specified uniform resource locator (URL) address and an instruction corresponding to said specified URL address, and the procedure for said electronic device to process according to the processing condition of said blacklist blocking module comprises the steps of: said electronic device reading a webpage editing content and determining if it is necessary to download and process said specified URL address and execute the instruction of said blocking condition defined by said blacklist blocking module, then said electronic device prohibits downloading and processing said URL address.

5. The method for blocking network advertising of claim 4, wherein said webpage editing content is considered normal and processed until the procedure ends if said specified URL address of said blocking condition defined by said blacklist blocking module is not matched.

6. The method for blocking network advertising of claim 4, wherein said URL address prohibited from downloading and being processing includes an instruction selected from the collection of a popup instruction, a floating instruction and a script instruction.

7. The method for blocking network advertising of claim 1, wherein said blocking software program comprises a white list blocking module, and said blocking condition defined by said white list blocking module has at least one specified uniform resource locator (URL) address and at least one instruction corresponding to said specified URL address, and the procedure for said electronic device to process according to the processing condition of said white list blocking module comprises the steps of:
said electronic device determines if a specified URL address requiring download and processing when said electronic devices reads a webpage editing content matches the URL address of said blocking condition defined by said white list blocking module and said instruction corresponding to said specified URL address; if a specified URL address requiring download and processing of said webpage editing content matches the specified URL address of said blocking condition defined by said white list blocking module and the instruction corresponding to said specified URL address, then said webpage editing content is considered normal and processed until the procedure ends.

8. The method for blocking network advertising of claim 7, wherein said electronic device determines if a specified URL address requiring download and processing when said electronic devices reads a webpage editing content mismatches the URL address of said blocking condition defined by said white list blocking module and the instruction corresponding to said specified URL address, then said electronic device prohibits downloading and processing said specified URL address.

9. The method for blocking network advertising of claim 1, wherein said blocking software program sets an option defined item for each of said blocking modules, and said option defined item selectively defines the opening and the closing of said blocking module corresponding to said option defined item after said electronic device executes said blocking software program.

10. The method for blocking network advertising of claim 1, wherein said blocking software program is a conditional blocking module, and said blocking condition defined by said conditional blocking module comprises at least one instruction and the procedure taken by said electronic device to process said processing condition of said conditional blocking module comprises the steps of;
determining if said webpage editing content read by said electronic device includes the instruction defined by said conditional blocking module;
if said webpage editing content includes a matched instruction defined by said conditional blocking module, then said electronic device is requested to determine if said electronic device fulfills a start condition before executing said instruction;
if said electronic device fulfills said start condition, then said webpage editing content is considered normal and processed until the procedure ends.

11. The method for blocking network advertising of claim 10, wherein said electronic device is determined of not fulfilling said start condition before said instruction is executed, and then said electronic device prohibits the processing of said webpage editing content.

12. The method for blocking network advertising of claim 10, wherein said start condition specifies that an input signal produced by an external input device is read before requesting to open a new window.

13. The method for blocking network advertising of claim 1, wherein said blocking software program comprises a learning blocking module and a blocking condition defined by said learning blocking module comprises at least one instruction and is capable of recording at least one limit address, and the procedure for said electronic device processes according to said processing condition of said learning blocking module comprises the steps of:
determining if said webpage editing content read by said electronic device includes a matched instruction defined by said learning blocking module and said specified URL address corresponding to said instruction also matches with said limit address; if said webpage editing content read by said electronic device includes a matched instruction defined by said learning blocking module and said specified URL address corresponding to said instruction also matches with said limit address, then said webpage editing content is considered normal and said instruction is not processed.

14. The method for blocking network advertising of claim 13, wherein if said webpage editing content read by said electronic device does not include a matched instruction defined by said learning blocking module, then said webpage editing content is processed regularly until the procedure ends.

15. The method for blocking network advertising of claim 13, wherein if said webpage editing content read by said electronic device includes a matched instruction defined by said learning blocking module, and said specified URL address corresponding to a mismatched limit address recorded by said blocking condition defined by said learning blocking module, then a query window is opened for asking a user to permit the execution of said instruction defined by said learning blocking module and download to another webpage editing content according to said specified URL address'
if said user permits the execution of said instruction defined by said learning blocking module, then said webpage editing content is considered normal and processed until the procedure ends.

16. The method for blocking network advertising of claim 15, wherein if said user does not permit the execution of said instruction defined by said learning blocking module after said query window is opened, then said electronic device prohibits processing said webpage editing content and selectively record said specified URL address of said instruction and said script as a limit address.

17. The method for blocking network advertising of claim 1, wherein said blocking software program comprises a prohibitive blocking module and a blocking condition defined by said prohibitive blocking module comprises at least one instruction, and the procedure of said electronic device processing according to said processing condition of said prohibitive blocking module comprises the steps of:
determining if said webpage editing content read by said electronic device includes a matched instruction defined by said prohibitive blocking module;
if said webpage editing content read by said electronic device includes a matched instruction defined by said prohibitive blocking module, then said instruction defined by said prohibitive blocking module is not executed.

18. The method for blocking network advertising of claim 17, wherein if said webpage editing content read by said electronic device does not include a matched instruction defined by said prohibitive blocking module, then said webpage editing content is considered normal and processed until the procedure ends.

19. The method for blocking network advertising of claim 1, wherein said blocking software program comprises a position limit blocking module and a blocking condition defined by said position limit blocking module comprises at least one instruction, and the procedure of said electronic device processing according to said processing condition of said position limit blocking module comprises the steps of:
determining if said webpage editing content read by said electronic device includes a matched instruction defined by said position limit blocking module;
if said webpage editing content read by said electronic device includes a matched instruction defined by said position limit blocking module, then said webpage editing content is displayed in a specified area.

20. The method for blocking network advertising of claim 1, wherein said blocking software program comprises a time limit blocking module and a blocking condition defined by said time limit blocking module comprises at least one instruction, and the procedure of said electronic device processing according to said processing condition of said time limit blocking module comprises the steps of:
determining if said webpage editing content read by said electronic device includes a matched instruction defined by said time limit blocking module;
if said webpage editing content read by said electronic device includes a matched instruction defined by said time limit blocking module, then said webpage editing content is considered to be within a specified time;
if said webpage editing content is within said specified time, then the execution of said instruction defined by said time limit blocking module is permitted.

21. The method for blocking network advertising of claim 20, wherein if said webpage editing content is not within said specified time, then the execution of said instruction defined by said time limit blocking module is not permitted.

22. The method for blocking network advertising of claim 1, wherein said blocking software program comprises a mask blocking module and a blocking condition defined by said mask blocking module comprises at least one extension of a filename, and the procedure of said electronic device processing according to said processing condition of said mask blocking module comprises the steps of:
determining if said webpage editing content read by said electronic device includes a matched instruction defined by said mask blocking module;
if said webpage editing content read by said electronic device includes a matched instruction defined by said mask blocking module, then the download and processing of said webpage device of said filename extension defined by said mask blocking module are permitted.

23. The method for blocking network advertising of claim 22, wherein if said webpage editing content read by said electronic device does not include a matched instruction defined by said mask blocking module, then said electronic device continues processing until the procedure ends.

24. The method for blocking network advertising of claim 1, wherein said blocking software program comprises a default blocking module and a blocking condition defined by said default blocking module comprises at least one filename extension, and the procedure of said electronic device processing according to said processing condition of said mask blocking module comprises the steps of:
determining if said webpage editing content read by said electronic device includes a matched instruction defined by said default blocking module;
if said webpage editing content read by said electronic device includes a matched filename extension defined by said default blocking module, then the download and process of said webpage device of said filename extension defined by said mask blocking module are permitted.

25. The method for blocking network advertising of claim 24, wherein if said webpage editing content read by said electronic device does not include a matched instruction defined by said default blocking module, then the download is not permitted and said webpage device of said filename extension defined by said mask blocking module is processed.
